# EUROPEAN PATENT APPLICATION

(11) **EP 3 907 468 A1**
(43) Date of publication of application: **10.11.2021**
(21) Application number: 20173645.1
(22) Date of filing: 08.05.2020
(51) Int. Cl.: G01C 21/00, G08G 1/16, H04W 4/46

(54) **VEHICLE, APPARATUS, METHOD, AND COMPUTER PROGRAM FOR DETERMINING A MERGED ENVIRONMENTAL MAP**

(71) Applicant: Volkswagen Aktiengesellschaft, 38440 Wolfsburg (DE)
(72) Inventor: Rech, Bernd, 38556 Bokensdorf (DE); Kwasny, Julia, 38448 Wolfsburg (DE); Kleinau, Sandra, 38531 Rötgesbüttel (DE); Lehmann, Bernd, 38444 Wolfsburg (DE)

(57) **Abstract**

Embodiments relate to a vehicle, an apparatus, a method, and a computer program for determining a merged environmental map of the vehicle. The method (10) for a vehicle (100) and for determining a merged environmental map of the vehicle (100) comprises obtaining (12) information related to a first environmental map, which is based on messages communicated with other vehicles or infrastructure in the environment. The method (10) comprises obtaining (14) information related to a second environmental map, which is based on sensor data of the vehicle (100). The method (10) further comprises determining (16) the merged environmental map based on the information related to the first environmental map and the information related to the second environmental map.

## Description

The present invention relates to a vehicle, an apparatus, a method, and a computer program for determining a merged environmental map of the vehicle, more particularly, but not exclusively, to a concept for merging environmental maps which are based of different information sources.

Direct communication between mobile devices, also referred to as device-to-device (D2D), vehicle-to-vehicle (V2V), or car-to-car communication (C2C), has been a feature under development of newer generations of mobile communication systems. By enabling direct communication between vehicles, message exchange can be enabled at low latencies. These messages can be used to share information among road participants.

Document KR2017124214A provides a digital map creation system based on vehicles and infrastructure. Vehicle information is received from vehicles on the road, road information is detected, and a map is created using the vehicle information and the road information. Accordingly, it is possible to distinguish lanes and vehicles on the road when an unexpected situation happens and to track paths of vehicles.

A concept for wireless sensor networks (WSNs), including vehicle based WSNs, is described in document US 2019/0132709 A1. A roadside unit (RSU) includes one or more fixed sensors covering different sectors of a designated coverage area. The RSU uses the sensors to capture sensor data that is representative of objects in the coverage area, tracks objects (e.g. vehicles) in the coverage area, and determines regions in the coverage area that are not adequately covered by the sensors (e.g. "perception gaps"). When the RSU identifies an object that is in or at a perception gap, then the RSU sends a request to that object for sensor data captured by the object's on-board sensors. The RSU obtains the sensor data from the object and uses the obtained sensor data to complement the knowledge at the RSU ("filling the perception gaps").

Document CN109709593A discloses an intelligent networked-vehicle-mounted terminal platform based on tight "cloud-end" coupling. The platform carries out interaction with a cloud platform. A high-precision positioning unit is used for realizing all-weather high-precision positioning of vehicles in a GNSS positioning, network positioning or autonomous positioning mode. A map matching recognition unit invokes high-precision map information of a current vehicle area of the cloud platform by combining the positioning information of a vehicle and thus forms a dynamic high-precision map. A driving environment sensing unit is used for sensing the vehicle body and environmental data by using sensor and network communication technology. A vehicle-road coordination control unit carries out multi-source data fusion based on integration of data from the driving environment sensing unit, the map matching recognition unit and the high-precision positioning unit, carries out the driving environment analysis, makes a driving decision by combining a cloud control command, and reporting the decision to the cloud platform. According to the invention, deep fusion interaction between the vehicle and the external environment is realized by employing the tight "cloud-end" coupling mode.

There is a demand for an improved concept for generating an environmental map.

This demand is addressed by the independent claims attached.

Embodiments are based on the finding that there are multiple sources for environmental information available at a vehicle. With the introduction of message exchange between vehicles or traffic participants, the message content can be used to determine an environmental map. The messages from the traffic participants form a first source for information on the environment. A second source are the vehicle sensors, which sense the environment. Based on the sensor data a second environmental map can be determined. An improved environmental map can be generated by merging information from the first and second environmental maps.

Embodiments provide a method for a vehicle and for determining a merged environmental map of the vehicle. The method comprises obtaining information related to a first environmental map, which is based on messages communicated with other vehicles or infrastructure in the environment. The method further comprises obtaining information related to a second environmental map, which is based on sensor data of the vehicle. The method further comprises determining the merged environmental map based on the information related to the first environmental map and the information related to the second environmental map. Embodiments may enable a determination of a reliable high-definition map at a vehicle.

In some embodiments the method may further comprise recording a trace of the information related to the first environmental map, the second environmental map, or both. The trace comprises a progression of one or more objects in the first environmental map, the second environmental map, or both, over a time window. Taking traces into account may further contribute to obtaining a higher reliability of a status of an environment in the merged environmental map.

The first environmental map, the second environmental map, or both, may be further refined based on logical considerations regarding movements or locations of one or more objects in the first environmental map, the second environmental map, or both. Further refinements may be achieved considering logical interrelations for objects in the environment.

For example, the merged environmental map may be refined based on logical considerations regarding movements or locations of one or more objects in the first environmental map, the second environmental map, or both. Embodiments may determine a high reliability of the merged map by fusing information of the base maps and logical implications of the objects over time.

The logical considerations may comprise an evaluation against a predetermined street map. For example, a predetermined map may be used for plausibility checking in a determined map.

The determining of the merged environmental map may further comprise merging objects determined in the first and second environmental map into the merged environmental map in some embodiments. The merged environmental map may benefit from details of the base maps.

For example, the determining of the merged environmental map further comprises merging raw data of the first and second environmental maps into merged raw data for the merged environmental map. In some embodiments merged raw data may be used to determine the merged map. Merged raw data may be interpreted rather than interpreting two separately interpreted base maps.

At least in some embodiments the method may further comprise determining a table with environmental data as a basis for the first environmental map, the environmental data is based on the messages communicated with other vehicles or infrastructure in the environment, wherein the table is organized as a ring buffer, which stores messages received in a time window. Embodiments may enable an automized consideration of inter-vehicular messages in the first environmental map.

The time window may extend from the past to the present and messages, which are older than a certain predefined time threshold, may be deleted from the ring buffer. Embodiments may enable a certain memory depth for the first environmental map.

The messages communicated with other vehicles may comprise information on a sender of the message, a location of the sender, and a confidence on the location. The method may further comprise determining a confidence corridor of a path of the sender over time as confidence information for the first environmental map. Confidence information over time may enable a higher reliability.

Furthermore, in some embodiments the method may comprise determining confidence information for the second environmental map based on the sensor data of the vehicle. Some embodiments may enable merging confidence information and/or merging environmental information based on its confidence in the respective first and/or second environmental maps.

The determining of the merged environmental map may be further based on the confidence information for the first environmental map, the confidence information for the second environmental map, or both. The merged map may further comprise confidence information on its details.

Embodiments further provide a computer program having a program code for performing one or more of the above described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

Another embodiment is an apparatus for a vehicle and for determining a merged environmental map of the vehicle. The apparatus comprises one or more interfaces configured to obtain information on first and second environmental maps. The apparatus further comprises a control module, which is configured to control the one or more interfaces, wherein the control module is further configured to perform one of the methods described herein. Another embodiment is a vehicle comprising the apparatus.

Some other features or aspects will be described using the following non-limiting embodiments of apparatuses or methods or computer programs or computer program products by way of example only, and with reference to the accompanying figures, in which:
Fig. 1 illustrates a block diagram of an embodiment of a method for a vehicle and for determining a merged environmental map of the vehicle;
Fig. 2 illustrates block diagrams of embodiments of an apparatus for a vehicle and a vehicle;
Fig. 3 depicts map information refining in an embodiment; and
Fig. 4 depicts further map refining examples in embodiments.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

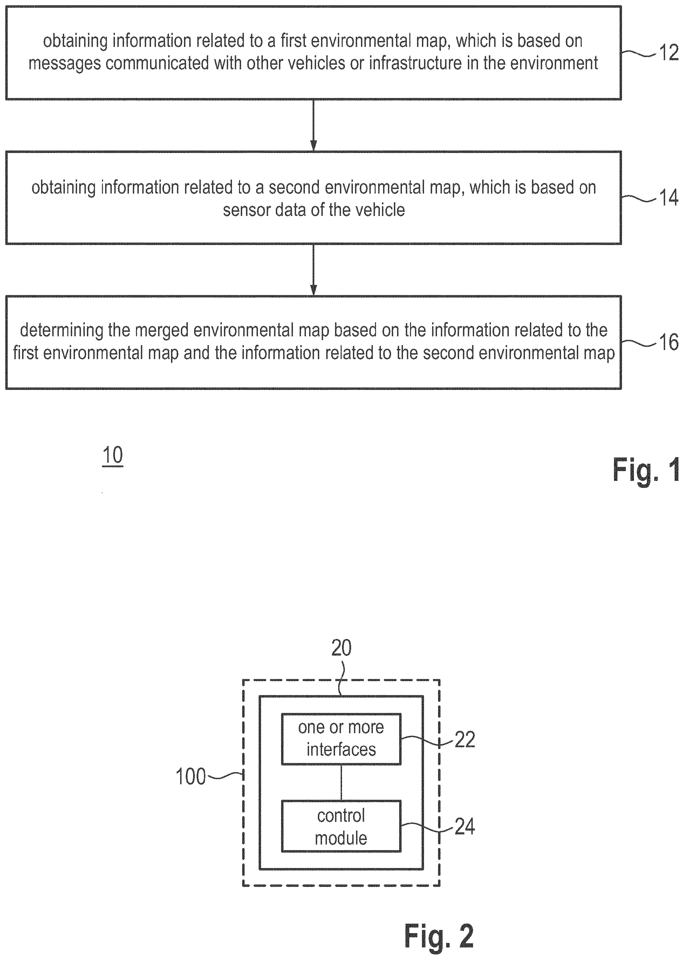

Fig. 1 illustrates a block diagram of an embodiment of a method 10 for a vehicle and for determining a merged environmental map of the vehicle. The method 10 comprises obtaining 12 information related to a first environmental map, which is based on messages communicated with other vehicles or infrastructure in the environment. The method 10 comprises obtaining 14 information related to a second environmental map, which is based on sensor data of the vehicle. The method 10 further comprises determining 16 the merged environmental map based on the information related to the first environmental map and the information related to the second environmental map.

User equipment (UEs)/vehicles may communicate directly with each other, i.e. without involving any base station transceiver, which is also referred to as Device-to-Device (D2D) communication. An example of D2D is direct communication between vehicles, also referred to as Vehicle-to-Vehicle communication (V2V), car-to-car, dedicated short range communication (DSRC), respectively. Technologies enabling such D2D-communication include 802.11p and beyond, 3GPP (Third Generation Partnership Project) system (4G (4^{th} Generation), 5G (5^{th} Generation), NR (New Radio) and beyond), etc. For example, vehicles exchange certain messages, for example Cooperative Awareness Messages (CAM) or Decentralized Environment Notification Messages (DENM), etc. The content of such messages may enable recipients to become aware of their environment and determine the first environmental map.

An environmental model may be a digital model of the environment of the vehicle, which can be based on sensor data or on exchanged messages. For example, a vehicle can be equipped with multiple sensors, such as visual/optical (camera), radar, ultrasonic, lidar (light detection and ranging) etc. A vehicle may model its surroundings using this sensor data. At least in some embodiments such a model may be based on known static data, e.g. as map data comprising a course of one or more roads, intersections, traffic infrastructure (lights, signs, crossings, etc.), buildings, etc. Such a basic layer for the environmental model may be complemented by dynamic or moving objects detected through sensor data. Such a sensor data-based environmental model may form the basis for the second environmental map.

An environmental map may comprise static and dynamic objects in the environment of the vehicle/traffic entity along at least a part of the vehicle's trajectory. Such a part of the trajectory may be, for example, the part the vehicle is planning to travel in the next 30s, 1 minute, 5 minutes, 10 minutes, etc. A dynamic object is one that is not permanently static/fixed such as other road participants, pedestrians, vehicles, but also semi-static objects such as components of a moving construction side, traffic signs for road or lane narrowing, etc. For example, such dynamic objects may be other vehicles, pedestrians, bicycles, road participants, etc. When determining the environmental model not all objects in the model may be determined with the same confidence. There are objects for which a higher certainty can be achieved than for others. For example, if multiple sensors can identify or confirm a certain object its presence and/or state of movement can potentially be determined with a higher confidence compared to a case in which only data from a single sensor is indicative of an object. Similar considerations apply with respect to a message-based map. If there is an object in the environment multiple traffic participants report on, a higher confidence results as compared to the case in which only a single road participant reports on the object.

Fig. 2 illustrates block diagrams of embodiments of an apparatus 20 for a vehicle 100 and a vehicle 100. The apparatus 20 for the vehicle 100 and for determining a merged environmental map of the vehicle 100 comprises one or more interfaces 22 configured to obtain information on first and second environmental maps. The apparatus 20 further comprises a control module 24, which is coupled to the one or more interfaces 22 and which is configured to control the one or more interfaces 22. The control module 24 is further configured to perform one of the methods 10 described herein. Fig. 2 further illustrates an embodiment of a vehicle 100 comprising an apparatus 20 (shown in broken lines as being optional from the perspective of the apparatus 20).

In embodiments, the one or more interfaces 22 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 22 may comprise further components to enable according communication, e.g. in a mobile communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 22 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the one or more interfaces 22 may serve the purpose of transmitting or receiving or both, transmitting and receiving, information, such as information related to capabilities, control information, payload information, application requirements, trigger indications, requests, messages, data packets, acknowledgement packets/messages, etc.

As shown in Fig. 2 the one or more interfaces 22 are coupled to the respective control module 24 at the apparatuses 20. In embodiments the control module 24 may be implemented using one or more processing units, one or more processing devices, any means for processing, such as a processor, a computer or a programmable hardware component being operable with accordingly adapted software. In other words, the described functions of the control module 24 may as well be implemented in software, which is then executed on one or more programmable hardware components. Such hardware components may comprise a general purpose processor, a Digital Signal Processor (DSP), a micro-controller, etc.

In embodiments, communication, i.e. transmission, reception or both, may take place among vehicles directly and/or between mobile transceivers/vehicles and a network component/entity (infrastructure or mobile transceiver, e.g. a base station, a network server, a backend server, etc.). Such communication may make use of a mobile communication system. Such communication may be carried out directly, e.g. by means of device-to-device (D2D) communication, which may also comprise vehicle-to-vehicle (V2V) or car-to-car (C2C) communication in case of vehicles, and which may be carried out using the specifications of a mobile communication system.

In embodiments the one or more interfaces 22 can be configured to wirelessly communicate in the mobile communication system. For example, direct cellular vehicle-to-anything (C-V2X), where V2X includes at least V2V, V2-Infrastructure (V2I), V2-Pedestrian (V2P), etc., transmission according to 3GPP Release 14 onward can be managed by infrastructure (so-called mode 3 in LTE) or run in a UE (so-called mode 4 in LTE).

Embodiments may enable an association of objects detected using sensors, with objects detected using messaging between vehicles, e.g. V2X. The association of V2X messages and their senders to vehicles in an environmental model of a vehicle or traffic infrastructure might not be straight forward and can be challenging. V2X senders may determine their own position using satellite systems, e.g. Global Navigation Satellite Systems (GNSS) and might include only imprecise position information in their messages.

Embodiments may comprise recording a trace of the information related to the first environmental map, the second environmental map, or both, the trace comprising a progression of one or more objects in the first environmental map, the second environmental map, or both, over a time window. For example, in an embodiment the method may
- record a trace of V2X messages,
- assign the messages to the first environmental map (V2X-map),
- improve the assignment to lanes of a road or street using logical relations,
- record a trace of sensor-based objects in the environment,
- assign sensor-based objects to second environmental map,
- high-level-fusion of detected vehicles in the maps, and
- evaluating correlation in the traces.

As outlined above the method 10 may comprise refining the first environmental map, the second environmental map, or both, based on logical considerations regarding movements or locations of one or more objects in the first environmental map, the second environmental map, or both.

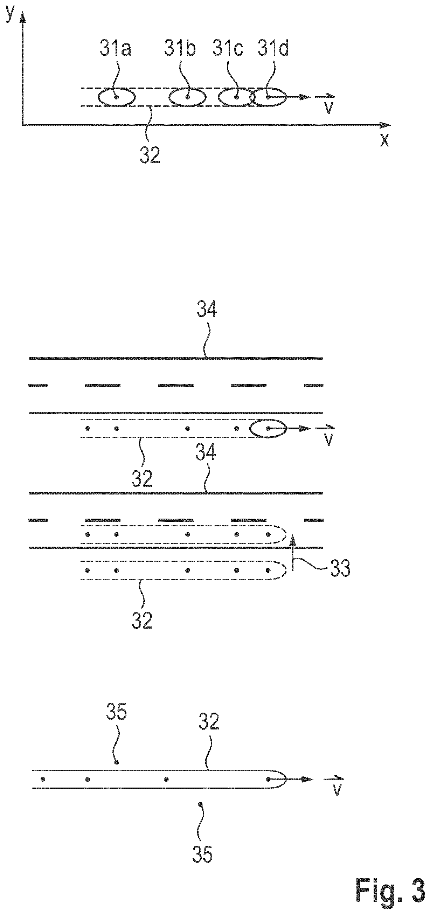

Fig. 3 depicts map information refining in an embodiment. At the top Fig. 3 shows a plane defined in x and y-coordinates. In the plane there are multiple locations of a vehicle as detected in the past 31a, 31 b, 31c and a present location 31d (making up a trace) in which a current velocity vector *̅v̅*̅ is also shown. The locations are given in absolute coordinates surrounded by an elliptic confidence area. As the vehicle proceeds through locations 31a, 31b, 31c, and 31d a tube or corridor 32 of confidence can be determined along the route of the vehicle. This corridor 32 is shown in dotted lines in Fig. 3. The messages communicated with other vehicles comprise information on a sender of the message, a location of the sender, and a confidence on the location. The method 10 may further comprise determining a confidence corridor of a path of the sender over time as confidence information for the first environmental map.

V2X vehicles may send status messages cyclically, in a European standard these messages are called Cooperative Awareness Messages (CAM) or in a US standard such messages are referred to as Basic Safety Messages (BSM). These comprise information related to locations/positions estimated at the transmitter/sender using a localization system and may indicate their accuracy/confidence, which is shown as an ellipse (confidence ellipse) in Fig. 3. Such an ellipse corresponds to a distribution of the probability that the true position lies within the ellipse. Furthermore, the history of the last sent positions is given, the path history (limited to a maximum distance of e.g. 300 m or 40 positions). The send rate of the CAM/BSM may depend on driving dynamics and may range between 2 Hz and 10 Hz. The path history may be sent at 2 Hz. For privacy reasons, V2X messages may contain a pseudonym, which is cyclical, e.g. it changes after every 15 minutes. In this case, the old path history may be deleted and a new path history may be started. Event messages (e.g. a Decentralized Environmental Notification Message, DENM) may also contain a history of the last sent positions. It can be assumed that new, future V2X messages may also send position information.

Ego localization in vehicles is typically carried out using GNSS systems (e.g. GPS) using vehicle odometry. The accuracy here is in the meter range and can increase to several 10 meters in urban surroundings if the view of the satellites (house canyons) is lost. For this reason, automatically driving vehicles normally use (in addition) other principles for their ego localization, such as a landmark-based localization achieving better accuracy in the decimeter range. It can be assumed that at least the first generations of V2X vehicles essentially use a GNSS-based ego localization.

CAM/BSM may comprise further information such as the vehicle speed and direction of movement, the status of the indicators and the vehicle class. Emergency vehicles also send information when they have special right of way or when they secure a hazard.

Embodiments may process information about the vehicle location (ego localization), the localization accuracy, the direction of movement, the path history, the vehicle dynamics and additional information such as the vehicle class and emergency vehicle with special right of way.

Underneath the general representation at the top of Fig. 3, Fig. 3 shows a scenario in which a predetermined street map with a road 34 is used as an overlay of the confidence corridor 32 of locations (logical consideration). As can be seen from Fig. 3, the trace 32 lies next to the road 34 rather than on the road 34. Therefore, the location of the confidence corridor 32 is considered not plausible. As further shown in Fig. 3 the method 10 then refines the corridor's location and shifts it onto the lane of the road corresponding to the direction of the velocity vector *̅v̅*̅ as indicated by the arrow 33. In this embodiment the logical considerations comprise evaluating against a predetermined street map with the road 34. The logical consideration is that a vehicle driving that fast next to the road does not make sense and is not plausible. Another example is shown at the bottom of Fig. 3. Here, a trace of locations is shown, which lie in the location corridor 32 with two exceptions 35 (runaway values). In embodiments a best fit method (e.g. least square error) may be used to find the true trajectory of a vehicle and define the corridor 32 (probability of stay).

In embodiments the method 10 may comprise refining the merged environmental map based on logical considerations regarding movements or locations of one or more objects in the first environmental map, the second environmental map, or both.

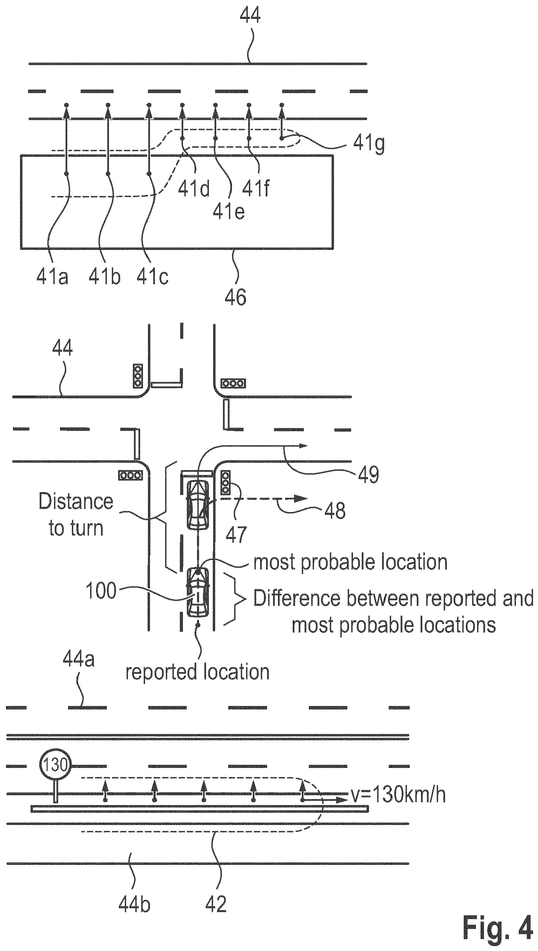

Fig. 4 depicts further map refining examples in embodiments. At the top Fig. 4 shows a scenario with a road 44 and a building 46. A trace of locations 41a-g of a vehicle happens to run partly through the building 46 (41a-c) and partly next to the road (41d-g). This can, for example, be due to imperfections in satellite positioning (e.g. Global Positioning System, GPS) evoked by shadowing effects of the building 46. In this embodiment a correction of the sections is done to correct measurement errors of the GPS signals.

Fig. 4 shows another scenario with an intersection 44 in the center. A vehicle 100 passes a traffic light 47 and turns right. The trajectory 48, which is based on a trace of locations, is shown by the dotted arrow. Since this trajectory 48 indicates an early turn, even before passing the traffic light 47, this trajectory 48 is not plausible. Therefore, it is corrected to follow trajectory 49, which lies on the right lane for turning right and which is the more probable. When having the knowledge of this correction other points of the trajectory and in case of systematic errors (GPS imperfections due to shadowing and path reflection) waiting locations at the traffic light can be corrected as well. As indicated in Fig. 4, a reported waiting location (*̅v̅*̅= 0) may differ from a most probable location by a certain difference. From former reports a distance to turn may be known, which can serve as basis for correction.

Fig. 4 illustrates another refinement in an embodiment at the bottom. In this scenario a highway 44a runs in parallel to a farm track 44b. A speed limit on the highway is 130km/h and a reported trace 42 of a vehicle lies between the highway 44a and the farm track 44b. As the velocity vector *̅v̅*̅ indicates a magnitude of 130km/h it is significantly more probable that the vehicle travels on the highway 44a than it is for the farm track 44b. Consequently, the trace 42 is shifted onto the corresponding highway lane 44a in this embodiment.

Frequently, several sensor systems are used to detect objects in the surroundings of a vehicle, e.g. B. camera, lidar and radar. When determining the objects, the information from the individual sensor systems can be merged or fused. This can be done on the object level (high-level fusion), whereby the objects are first determined individually by the sensor systems and then a fusion then takes place. A fusion can also take place at the level of the sensor data (low-level fusion). In some embodiments the sensor data are first merged and then the objects are determined. In other embodiments a high-level fusing may take place in which multiple maps are merged or fused on an object level rather than on a raw data level.

Some embodiments may hence merge objects determined in the first and second environmental map into the merged environmental map. A kind of high-level fusion may take place in some embodiments, in which the V2X vehicles are assigned to the detected vehicles. Additionally or alternatively, the determining 16 of the merged environmental map further comprises merging raw data of the first and second environmental maps into merged raw data for the merged environmental map.

At least for some embodiments it is assumed that a vehicle has at the following components available
- V2X-receiver unit,
- digital map,
- a localization system for determining its own location,
- a sensor system for object detection in the environment, and
- a processor or control module 24 to determine an environmental model and to associate V2X-vehicles.

In order to improve the association of the vehicles and/or objects in the environmental maps, the method 10 may comprise the following steps:
Determining/obtaining 12 the first environmental map based on V2X messages, cf. Fig. 1.
1. Information received with the V2X messages, e.g. positions, confidence ellipses, and path histories are stored in a table. For example, the information is sorted by sender identification and time of sending yielding a history or trace of a sender path. The method 10 may hence comprise determining a table with environmental data as a basis for the first environmental map. The environmental data is based on the messages communicated with other vehicles or infrastructure in the environment. For example, the table is organized as a ring buffer, which stores messages received in a time window.
2. Further information received with the messages (e.g. speed, direction, steering angle, etc.) and information like status of headlights and indicators, emergency vehicle information/indications are assigned to the respective locations.
3. For example, the table may be updated in a cyclic manner and it may be limited to a certain time window or period, e.g. the last 10s, 30s, 60s, 2minutes, etc. Implemented as a ring puffer older information gets overwritten. The time window may extend from the past to the present and messages, which are older than a certain predefined time threshold, are deleted from the ring buffer, get overwritten, respectively.
4. The content of the V2X- environment table are assigned to a digital map. Due to the confidence areas (ellipses in Fig. 3), confidence corridors result for the trace of location history of a sender. Depending on the actual confidence level the corridor may be subject to variations, e.g. when the confidence level changes within the time window.
5. In each confidence corridor there is a trajectory of a vehicle, which is composed of the reported locations and which is also referred to as path history. In case of missed or overheard messages, missing locations can be interpolated or averaged based on adjacent locations. For example, locations/positions of the V2X vehicles are provided in absolute coordinates and the path history are specified relatively thereto. In some embodiments there may be a respective conversion.
6. In case of runaway values, a best fit method may be applied to the trajectory and the confidence corridor. The runaway values may be identified and left out in some embodiments.
7. The confidence corridors and trajectories are then assigned to the map.
8. At least in some cases the trajectories may not be collocated with lanes in the map, as indicated in Figs. 3 and 4. Logical considerations or relations may then be used in embodiments, e.g. using ontology, to correct the confidence corridors and trajectories. For example, values of the corrected trajectories and confidence corridors are stored in a second table, while keeping the original values in the first table, e.g. for later use for control purposes or further corrections.
9. For each of the corrections there may be a confidence value (probability on its correctness), which is stored and which can be used in the further association.
10. If there are jumps, sudden peaks or changes in the path history, which can be evoked by measurement errors during the ego localization procedure (e.g. GPS), a correction may be applied on a section-by-section basis on the trajectory and the confidence corridor.
11. In case the velocity vector does not consider any terrain gradients (uphill, downhill) in the V2X messages (depending on standard) and/or if only its magnitude is provided, values in direction of driving in the map may be too high. A correction may be applied in some embodiments based on height information in the map, which may allow for vector decomposition in height components and driving direction components.
12. In case of a change in identification or pseudonym, one V2X-vehicle may disappear while a new one is created. In embodiments a plausibility check may be carried out on whether these vehicles are the same. For example, if the new vehicle starts off at the end position of the disappearing vehicle with the same or similar velocity vector, and the road configuration precludes that another vehicle cut in, then the probability is high that the vehicles are one and the same.
13. In embodiments one or more of the following non-limited group of logical relations may be used:
   13.1. A correction may consider passable and non-passable area in a street map. For example, vehicles cannot pass through buildings or travel on the side of a bridge. An evaluation of a confidence level of a correctness of a correction may consider whether a location of a vehicle is plausible (e.g. passing through a building or structure) or permitted (cutting over a traffic refuge/island).
   13.2. A correction may take further logical relations into account, which may result from the form of the trajectory, e.g. certain radii or traveled distances in relation to a reference point (e.g. the start or beginning of a curve).
   13.3. If there is a stop at a traffic light with a subsequent turn a correction of a stopping position in driving direction can be carried out in embodiments, e.g. using a comparison between a distance traveled after the stop until the vehicle starts to turn (steering angle analysis) and an according street map. This may result in in a most probable stop location and therewith in a correction distance compared to the reported position, cf. Fig. 4 scenario in the center.
   13.4. Correction in embodiments may consider traffic rules and regulations, e.g. different speed limits on adjacent or parallel roadways, cf. Fig. 4 scenario at the bottom. Traffic rules and regulations may be used for plausibility checks and for confidence determination on a correctness of corrections.
   13.5. Another logical consideration may refer to V2X-vehicles travelling in groups. Such groups may occur when multiple vehicles drive off at a traffic light or on a highway when multiple vehicles travel at the same speed, e.g. according to speed limits.
   In parallel a vehicle may determine a second environmental map comprising similar objects.
14. In parallel to the above determination of the first environmental map using V2X messages, embodiments may determine the second environmental map based on sensor data comprising information about objects in its surroundings and environment. In this process there may be measurement imperfections or errors in object detection and estimation of the ego pose. Similar to the above, locations/positions and confidence areas (ellipse) of the detected objects can be gathered/stored in a table and/or environmental map. Again, a trace or path history can be determined for all vehicles (trajectories, location-time-progress) including dynamic parameters, e.g. speed. An ego-trajectory and an ego-confidence corridor may also be included in the second environmental map. Table and map are cyclically updated. Similar refinement step may be applied as outlined above.
   Finally, the first and second environmental maps are merged/fused, the objects therein adjusted.
15. In this step the merging or fusing is done between the object environmental map based on the sensor data and the V2X environmental map. As the coverage of the V2X map may be larger or wider than that of the sensor data-based map the merging or fusing may be done only for an overlapping part or a subpart of the V2X map.
16. A comparison is carried out between the objects and trajectories of the maps. For example, statistical methods may be used. Among other things, a spatial course and speed profiles are considered. From a threshold to be determined (e.g. correlation measure), an assignment can be made, e.g. a V2X-transmitter is assigned to a detected vehicle.
17. Such an assignment may consider different vehicular classes (car, van, truck, etc.).
18. The assignment may comprise a confidence level for the respective corrections of the trajectories of the V2X vehicles.
19. The same principle may be used for fixed V2X-transmitters, such as traffic light equipped with sensors, infrastructure at intersections, roundabouts, highway entrances, etc.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a (non-transitory) computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

### List of reference signs

- 10: method for a vehicle and for determining a merged environmental map of the vehicle
- 12: obtaining information related to a first environmental map, which is based on messages communicated with other vehicles or infrastructure in the environment
- 14: obtaining information related to a second environmental map, which is based on sensor data of the vehicle
- 16: determining the merged environmental map based on the information related to the first environmental map and the information related to the second environmental map
- 20: apparatus for a vehicle and for determining a merged environmental map of the vehicle
- 22: one or more interfaces
- 24: control module
- 31a-d: history of locations
- 32: confidence corridor
- 33: shift
- 34: road
- 35: runaway value
- 41a-g: history of locations
- 42: confidence corridor
- 44: road
- 44a: highway
- 44b: farm track
- 46: building
- 47: traffic light
- 48: reported trajectory
- 49: corrected trajectory
- 100: vehicle

## Claims

1. A method (10) for a vehicle (100) and for determining a merged environmental map of the vehicle (100), the method (10) comprising
obtaining (12) information related to a first environmental map, which is based on messages communicated with other vehicles or infrastructure in the environment;
obtaining (14) information related to a second environmental map, which is based on sensor data of the vehicle (100); and
determining (16) the merged environmental map based on the information related to the first environmental map and the information related to the second environmental map.

2. The method (10) of claim 1, further comprising recording a trace of the information related to the first environmental map, the second environmental map, or both, the trace comprising a progression of one or more objects in the first environmental map, the second environmental map, or both, over a time window.

3. The method (10) of one of the claims 1 or 2, further comprising refining the first environmental map, the second environmental map, or both, based on logical considerations regarding movements or locations of one or more objects in the first environmental map, the second environmental map, or both.

4. The method (10) of one of the claims 1 to 3, further comprising refining the merged environmental map based on logical considerations regarding movements or locations of one or more objects in the first environmental map, the second environmental map, or both.

5. The method (10) of one of the claims 3 or 4, wherein the logical considerations comprise evaluating against a predetermined street map.

6. The method (10) of one of the claims 1 to 5, wherein the determining of the merged environmental map further comprises merging objects determined in the first and second environmental map into the merged environmental map.

7. The method (10) of one of the claims 1 to 6, wherein the determining of the merged environmental map further comprises merging raw data of the first and second environmental maps into merged raw data for the merged environmental map.

8. The method (10) of one of the claims 1 to 7, further comprising determining a table with environmental data as a basis for the first environmental map, the environmental data is based on the messages communicated with other vehicles or infrastructure in the environment, wherein the table is organized as a ring buffer, which stores messages received in a time window.

9. The method (10) of claim 8, wherein the time window extends from the past to the present and wherein messages, which are older than a certain predefined time threshold, are deleted from the ring buffer.

10. The method (10) of one of the claims 1 to 9, wherein the messages communicated with other vehicles comprise information on a sender of the message, a location of the sender, and a confidence on the location, and wherein the method (10) further comprises determining a confidence corridor of a path of the sender over time as confidence information for the first environmental map.

11. The method (10) of one of the claims 1 to 10, further comprising determining confidence information for the second environmental map based on the sensor data of the vehicle (100).

12. The method (10) of one of the claims 10 or 11, wherein the determining of the merged environmental map is further based on the confidence information for the first environmental map, the confidence information for the second environmental map, or both.

13. A computer program having a program code for performing at least one of the methods (10) of claims 1 to 12, when the computer program is executed on a computer, a processor, or a programmable hardware component.

14. An apparatus (20) for a vehicle (100) and for determining a merged environmental map of the vehicle (100), the apparatus (20) comprising
one or more interfaces (22) configured to obtain information on first and second environmental maps; and
a control module (24), which is configured to control the one or more interfaces (22), wherein the control module (24) is further configured to perform one of the methods (10) of claims 1 to 12.

15. A vehicle (100) comprising the apparatus (20) of claim 14.
